# EUROPEAN PATENT APPLICATION

(11) **EP 1 005 791 A2**
(43) Date of publication of application: **07.06.2000**
(21) Application number: 99117678.5
(22) Date of filing: 08.09.1999
(51) Int. Cl.: A01M 7/00

(54) **A control device**

(30) Priority: 08.09.1998 GB 9819506
(71) Applicant: Culley, John George, Lillingstone Lovell, Buckingham MK18 5BL (GB)
(72) Inventor: Culley, John George, Lillingstone Lovell, Buckingham MK18 5BL (GB)
(74) Representative: Raynor, Simon Mark

(57) **Abstract**

A control device (14) is provided for controlling the operation of boom-mounted agricultural equipment having a plurality of individually-operable boom sections (20). The control device (14) includes a switching device (28) for switching individual boom sections on and off, a timing device (26) connected to the switching device (28) for controlling the timing of the switching operations, and an input device (24) connected to the timing device (26) for entering the data required to determine the timing of the switching operations, and for initiating operation of the device.

## Description

The present invention relates to a control device for use in farming. In particular, but not exclusively, the invention relates to an electronic control device to aid crop spraying.

Farmers need to spray their crops with pesticides, herbicides and fungicides to, control pest damage, weeds and fungus outbreaks. However, public awareness of potential health and environmental hazards associated with crop spraying has increased, highlighted for example by allergic reactions and water course contamination. This has resulted in farmers being advised, when using certain chemicals, not to spray within a six metre boundary of a water course, to avoid double spraying and not to spray on Rights of Way, for example footpaths.

Modern sprayers generally have a boom width of between 12 and 24m. The boom is mounted on a tractor and is typically divided into four sections, each of which can be individually switched on or off by the operator.

The usual procedure when spraying an arable field is to spray the headland (the strip of land around the edge of the field) first, and then the rest of the field in strips by traversing the field along the usual wheel tracks (or "tramlines^{"}). When the tractor reaches the edge of the field after completing one of these strips, the sprayer is turned off to avoid spraying the headland twice and is then turned on again after the tractor has turned round.

A difficulty can arise if the edge of the field is not perpendicular to the tramlines (for example, because the field has an irregular shape). In this situation, one end of the sprayer cross the edge of the headland before the other end, which results in either large amounts of double spraying or areas being missed if the sprayer were to be turned on or off as a unit. To combat this, operators may switch sections of the sprayer off consecutively, as each crosses the edge of the headland, minimising the amount of double spraying. However, in practice this is difficult since the spraying speed is between 8 - 12 kph and the switches therefore have to be operated very quickly. This is burdensome to the operator and often inaccurate, resulting in more double spraying than necessary, sections of the crop being missed and a waste of the spray.

Another difficulty arises in fields that are crossed by a footpath. The recommended procedure is to drive along the footpath first spraying on either side of it to create "false headlands". The operator can then spray the rest of the field in the usual manner by driving along the tramlines and turning the sprayer off whilst crossing the footpath and false headlands. However, this again is very difficult in practice and frequently results in areas of the field being sprayed twice or missed, and is again burdensome for the operator. The procedure also requires the additional stage of spraying false headlands on either side of the footpath and therefore increases the time it takes to spray the field and adds to the tramlines crossing the field.

The aim of the present invention is to provide a control device that mitigates at least some of the above-mentioned problems.

According to the present invention there is provided a control device for controlling the operation of boom-mounted agricultural equipment having a plurality of individually-operable boom sections, the control device including a switching device for switching individual boom sections on and off, a timing device connected to the switching device for controlling the timing of the switching operations, and an input device connected to the timing device for entering the data required to determine the timing of the switching operations, and for initiating operation of the device.

Each individually-operable section of the boom-mounted equipment may include a plurality of operable devices (for example, spray nozzles or seed spouts) or, where those devices can be switched individually, each section may include just one operable device.

This invention provides a simple and efficient control device for automatically switching the individual sections of a boom-mounted sprayer on and off, in the correct sequence and at the correct time intervals, as the sprayer crosses a headland or Right of Way, such as a footpath. This helps to reduce the amount of double spraying and minimise the areas of crop missed by the sprayer, whilst reducing the burden on the driver, and avoiding accidental spraying of footpaths.

Advantageously, the input device includes an angle setting device, and an on/off control means. The angle setting device allows for the setting of the angle at which the boom will meet the headland or footpath. The on/off control means initiates the timing of the switching operations of the individual boom sections.

Advantageously, the input device includes means for setting the data required to determine the timing of the switching operations. The data may include variables such as the tractor speed and length of the individual boom sections. The tractor speed may be entered manually, or automatically by a speed sensor.

Alternatively the input device may include means for calculating the timing of the switching operations on the basis of time-based input signals.

Advantageously, the control device controls the operation of boom-mounted seeders, crop sprayers or fertilizer applicators.

Embodiments of the invention will now be described, by way of example, with reference to the accompanying drawings, of which:
Figure 1 is a schematic representation, showing the usual procedure for spraying an arable field;
Figure 2 is a schematic representation, showing a recommended procedure for spraying in the vicinity of a footpath;
Figure 3 is a schematic representation of the control device;
Figure 4 is a plan view of an in-cab control unit;
Figure 5 shows a tractor-towed sprayer approaching a footpath;
Figure 6 shows a tractor-towed sprayer upon reaching the footpath;
Figure 7 shows a tractor-towed sprayer as it crosses the footpath;
Figure 8 shows an alternative embodiment of the control device;
Figure 9 shows an alternative method of operation of the control device;
Figure 10 is a schematic representation of a retrofitted control device.

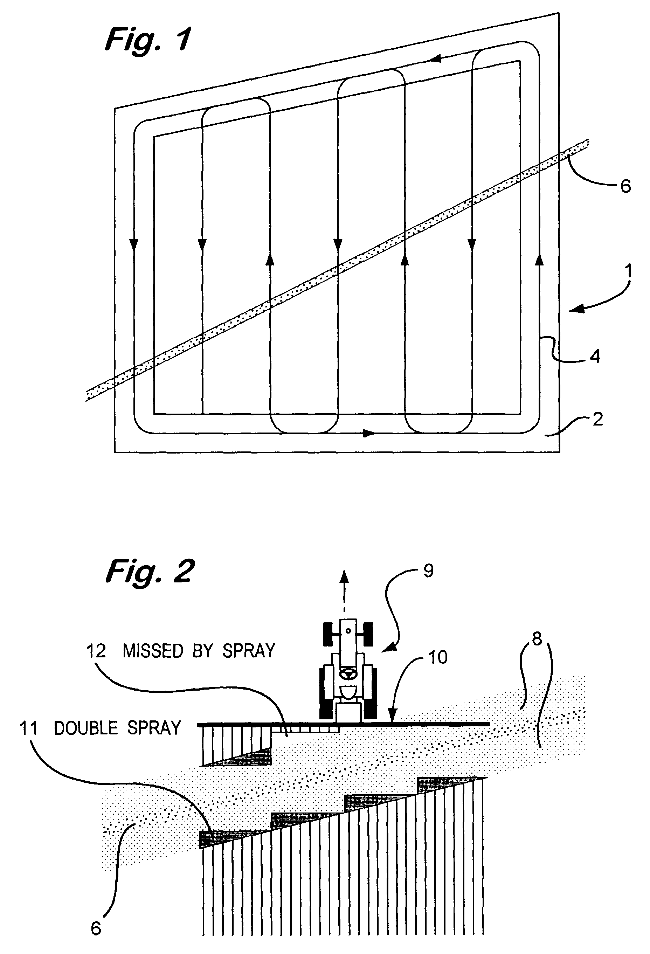

A schematic representation of an arable field 1 is shown in figure 1. The headland 2 is the strip of land around the edge of the field. Wheel tracks, or "tramlines" 4, extend across the field and divide it up into parallel strips. When spraying a field, the operator first sprays the headlands 2 before spraying the rest of the field by driving up and down the tramlines. If a footpath 6 crosses a field then it is necessary for the operator to avoid spraying the footpath.

Figure 2 shows schematically the recommended spraying process to be applied by farmers in order to avoid spraying of a Right of Way, for example a footpath 6. Farmers have been recommended to initially spray the section of field on either side of the footpath by travelling along the footpath with the relevant central section(s) switched off. This will create a false headland 8 that acts as a buffer zone on either side of the footpath. The field is then sprayed as usual by driving a tractor 9 along the usual tramlines that extend across the field. When the operator approaches the footpath each section on the spray boom 10 is switched off just before the section reaches the footpath and then switched back on again once the section has crossed the footpath. Although this process prevents the footpath from being sprayed it results in double spraying 11 of areas within the false headland, and also often results in areas of the crop being missed 12 by the spray, due to the operator turning a section of the sprayer off too soon or turning it back on too late. Also, at certain angles the leading section may have already been switched back on before the trailing section has been switched off, leading to possible confusion of the operator.

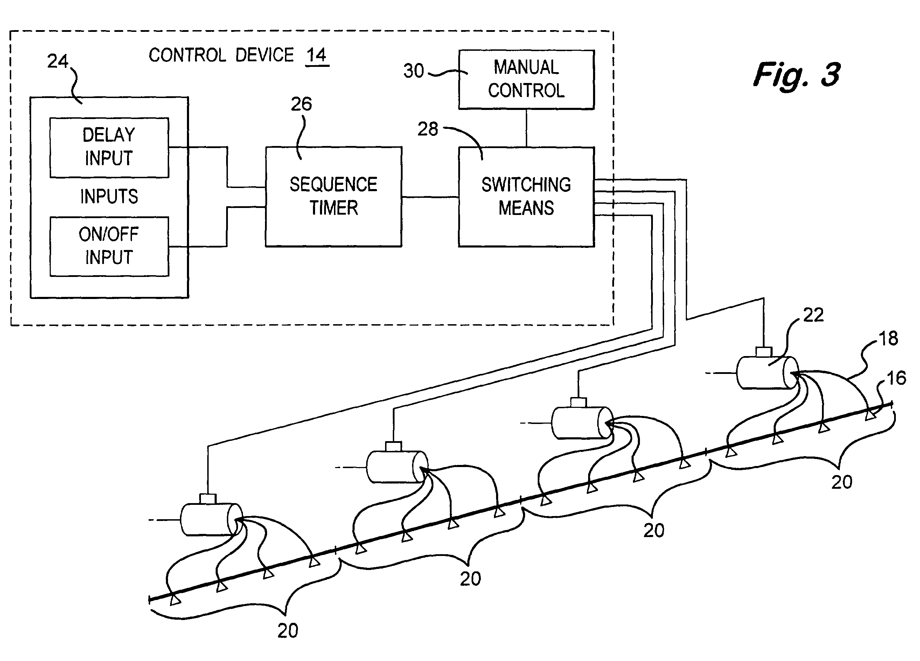

Figure 3 shows a schematic representation of the control device 14. Modem sprayers consist of a boom 10 along which there are a number of spray nozzles 16, which are fed through feed lines 18. The boom includes a plurality of individually-operable sections 20, with each individual section being controlled by a solenoid valve 22, enabling the operator to switch each section on and off as required. The control device 14 is connected to the solenoid valves 22 of each of the individual sections 20.

The control device 14 consists of one or more input means 24, for example a delay input and an on/off input. Using the information from the input means a sequence timer 26 calculates the correct delay intervals for switching the boom sections on and off. The sequence timer 26 is in turn connected to a switching means 28 which controls operation of the solenoid valves 22. There is also a manual control 30 enabling the operator to operate the boom sections 20 individually where necessary.

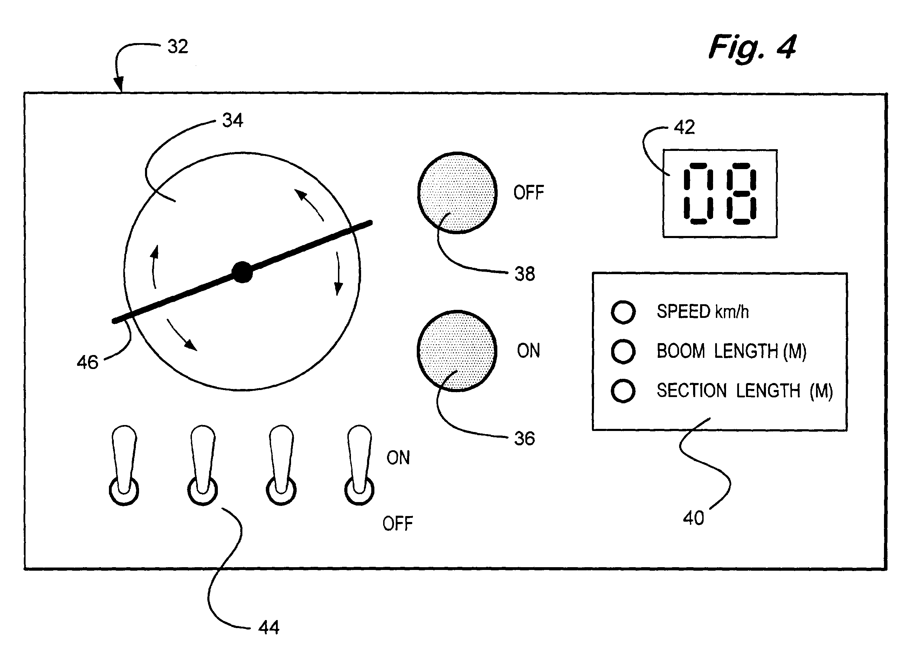

A control panel 32 for the control device is shown in figure 4. It consists of a first input means comprising an angle selector 34, a second input means comprising an on button 36 and an off button 38, an auxiliary input means 40 for other required data, a digital read out 42, and a set of individual section toggle switches 44.

The angle selector 34 may have three or four preset positions, including for example 90°, the angles of both headlands and the angle of a footpath relative to the tramlines. It allows the operator to select the angle at which the sprayer will meet the headland or footpath by means of a simple movable indicator 46. Where possible the angle of the field headlands or footpaths will be found before spraying and preset on the angle selector either by measurement from a field map, or by driving down the tramline with the sprayer off, stopping and sighting the angle along the angle selector. A third method would be to select the angle when approaching the headland or footpath with the sprayer switched on, before the leading boom section is switched off. When turning at a headland the angle set to switch off the boom will be the same as the angle used to switch the boom back on.

Alternatively, global positioning systems (GPS) may be used to accurately determine the angle of the headland or footpath relative to the tramlines for input into the angle selector 34.

The device requires the input of data relating to factors such as the speed of the sprayer, the length of the boom and the length of the individual boom sections, which are required in order to calculate the appropriate time delay for the boom section switching sequence. A simple input means 40, with a digital readout 42, is provided to enter the required data, enabling the calculation of the boom section time sequence. In the simplest form this input means will contain a speed setter, allowing the operator to set the predetermined speed of the sprayer. Alternatively the device may contain a speed sensor, in order to sense the actual speed of the sprayer automatically.

The individual boom section toggle switches 44 would be used when the operator requires one or more of the boom sections to remain off or on throughout a particular tack across a field. For example, when travelling down the length of a footpath in order to create a false headland, the central section(s) will remain off so as not to spray the footpath.

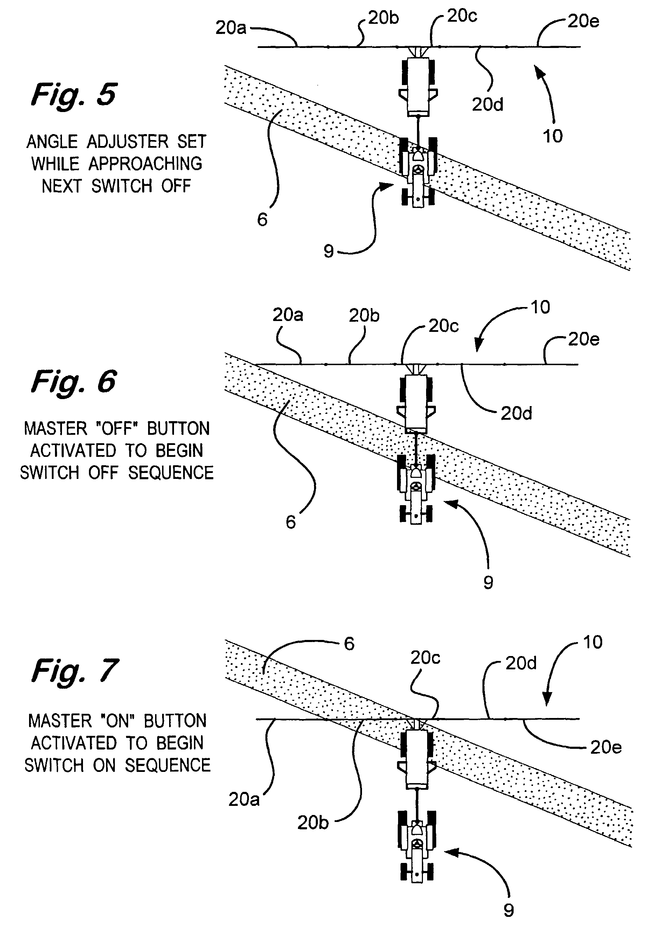

The operation of the device will now be described. As the sprayer approaches an area that should not be sprayed, for example a footpath 6, as shown in figure 5, the operator will input the required data using the control panel. The data will include the forward speed, boom length, boom section width and crossing angle. Using this information the device will calculate the required timing intervals for the switching sequence of the boom sections 20.

When the first boom section 20a reaches the footpath, as shown in figure 6, the operator will press the off switch, initiating the timing sequence for switching off the following boom sections 20b-e as each section reaches the first edge of the footpath 6. Once the first boom section 20a of the sprayer has crossed the footpath 6, as shown in figure 7, the operator will press the on switch, thereby switching the first boom section back on again, and initiating the timed sequence for switching on the following sections 20b-e as each in turn finishes crossing the footpath.

Using the device increases the accuracy of the switching process, allowing the operator to avoid spraying the footpath and making it unnecessary to create false headlands 8 on either side of the path. Double spraying 11is therefore avoided and the area of the field missed 12 is minimised. The burden on the operator is also greatly reduced, requiring only the operation of two buttons, once the other data has been entered.

It is also possible for the operator to retain the false headland, thereby reducing the amount of double spraying 11 close to the footpath, and ensuring that all sections of the crop are sprayed.

Recently, sprayers have become available that have individual solenoids at each jet, allowing each jet to be switched off individually. This would complement the present invention since controlling the individual jets at 0.5 m intervals would provide far superior results to controlling the 6m sections with 24m/4 section booms, substantially reducing the amount of double spraying.

Two alternative embodiments of the invention will now be described, in which a microprocessor is used in the control box allowing the use of a time based method to set the boom section time interval, instead of dialling in the angle. Standard data measurements, such as vehicle length, boom width and forward speed, would be preprogrammed in order to provide the microprocessor with sufficient information to calculate the correct delay intervals, and commence the correct boom section switching sequence. In place of the angle selector and the on and off buttons, there will be two pairs of on/off push button switches, which are pressed in sequence to provide an indication of the correct delay interval.

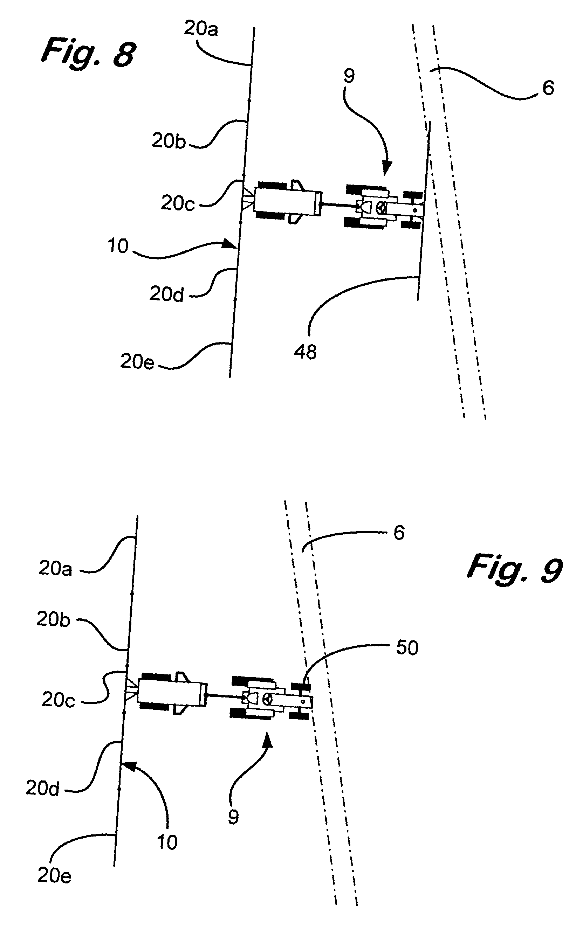

In the first alternative, a scaled-down dummy boom 48 is attached to the front of the tractor 9, as shown in figure 8. The two pairs of on/off push button switches are used to represent the two ends of the dummy boom 48. The operator would then concentrate on pressing the two off buttons at the points when the ends of the dummy boom 48 intersect with the first edge of the footpath 6. As the real boom 10 crosses the footpath two or three seconds later, the microprocessor automatically switches off the boom sections 20a-e in the correct time sequence. As the two ends of the dummy boom 48 cross the second edge of the footpath 6, the operator will press the two on buttons, enabling the timed sequence for switching the boom sections 20a-e back on again in sequence after they have cleared the footpath a few seconds later.

In the second alternative, as a known point at the front of the tractor 9, for example the front wheel 50 of the tractor, intersects the front edge of the footpath 6, as shown in figure 9, the operator will depress the first off button, then as the first boom section 20a intersects the front edge of the footpath the operator will depress the second off button. At this instant, assuming all standard data measurements have been preprogrammed, the boom section switching off sequence will commence, the delay between consecutive sections of the boom being determined by the time interval between pressing the two buttons. Similarly, by pressing the on buttons when the known point on the front of the tractor and the end of the first boom section 20a cross the second edge of the path, the switching on sequence will commence.

Alternatively, there may be only one switching on button, the time interval being determined from the two switching off buttons. Similarly, there may be only one switching off button, the time interval being determined from the two switching on buttons.

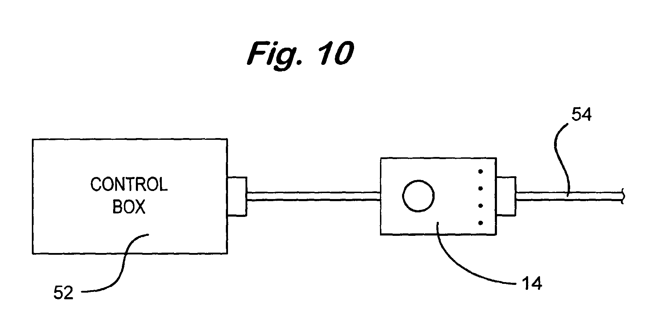

It is possible for the control device to be retrofitted onto different control boxes by positioning the device 14 between the original control box 52 and the electric cable 54 that leads to the solenoid valves 22 of the individual boom sections or jets, as shown in figure 10. By retrofitting the device, crop farmers will be able to take advantage of the resultant improved efficiency of crop spraying, without having the great expense of having to buy a new control box.

Various modifications of the invention are possible. For example, a spray pressure monitor may be included to complement the system.

The device could also be modified for use in other farming devices for example in seeders, thereby helping to reduce the amount of seed wasted.

## Claims

1. A control device for controlling the operation of boom-mounted agricultural equipment having a plurality of individually-operable boom sections, the control device including a switching device for switching individual boom sections on and off, a timing device connected to the switching device for controlling the timing of the switching operations, and an input device connected to the timing device for entering the data required to determine the timing of the switching operations, and for initiating operation of the device.

2. A control device according to claim 1, wherein the input device includes an angle setting device and an on/off control means.

3. A control device according to claims 1 or 2, wherein the input device includes means for setting the data required to determine the timing of the switching operations.

4. A control device according to claims 1 or 2, wherein the input device includes means for calculating the timing of the switching operations on the basis of time-based input signals.

5. A control device according to any one of the preceding claims for controlling the operation of boom-mounted seeders, crop sprayers or fertilizer applicators.
